# EUROPÄISCHE PATENTSCHRIFT

(11) **EP 3 945 006 B1**
(45) Veröffentlichungstag und Bekanntmachung des Hinweises auf die Patenterteilung: **27.03.2024**
(21) Anmeldenummer: 21186376.6
(22) Anmeldetag: 19.07.2021
(51) Int. Cl.: B62B 3/06

(54) **FLURFÖRDERZEUG MIT EINEM ZWEITEILIGEN DREIECKSHEBEL**
INDUSTRIAL TRUCK WITH A TWO-PART TRIANGULAR LEVER
CHARIOT DE MANUTENTION POURVU DE LEVIER TRIANGULAIRE EN DEUX PARTIES

(30) Priorität: 28.07.2020 DE 102020119915
(43) Veröffentlichungstag der Anmeldung: 02.02.2022
(73) Patentinhaber: Jungheinrich Aktiengesellschaft, 22047 Hamburg (DE)
(72) Erfinder: Schüler, Michael, 24558 Wakendorf II (DE); Lohmann, Helmut, 27404 Gyhum (DE); Krenzin, Marcel, 24576 Bad Bramstedt (DE); Brunckhorst, Holger, 22844 Norderstedt (DE)
(74) Vertreter: Hauck Patentanwaltspartnerschaft mbB

(56) Entgegenhaltungen:
- EP-A1- 0 439 837
- EP-A1- 3 354 535
- DE-A1- 3 614 986

## Beschreibung

Die vorliegende Erfindung betrifft ein Flurförderzeug mit einem Antriebsteil und einem mindestens einen Radarm aufweisenden Lastrahmen, der mittels eines Stellantriebs eine Hubbewegung ausführen kann. Für die Hubbewegung ist für jeden Radarm ein schwenkbar gelagerter Dreieckshebel vorgesehen, der in einem Gelenkpunkt mit einer Kinematikstange verbunden ist, die ein oder mehrere Lasträder in eine angehobene Position verstellen kann. Der Dreieckshebel übersetzt damit die Hubbewegung über die eine Kinematikstange in eine Bewegung der Lasträder. Bei der Kinematikstange wird zwischen einer Zug- und einer Druckstange unterschieden. Mit der Zugstange wird eine Zugkraft zum Fahrzeugkörper hin und von den Lasträdern fort ausgeübt, während die Druckstange von dem Fahrzeugkörper fort, hin zu dem oder den Lasträdern gedrückt wird.

Aus DE 2013 100 464 A1 ist ein Flurförderzeug bekannt geworden, das einen ersten Hebel mit einem ersten Lagerpunkt an dem Antriebsteil und einem zweiten Lagerpunkt an dem Lastteil aufweist sowie einen zweiten Hebel, der mit einem Lagerpunkt an dem Lastteil und mit Koppelpunkt mit dem Gestänge zum Anheben einer Lastrolle verbunden ist. Diese Hebelanordnung besitzt einen Zwischenhebel, der mit einem Koppelpunkt des ersten Hebels und einem weiteren Koppelpunkt des zweiten Hebels verbunden ist.

Aus DE 10 2009 033 709 A1 ist ein Flurförderzeug mit einem Fahrzeughauptrahmen und einem mindestens einen Radarm aufweisenden Lastrahmen bekannt. Zur Justierung eines Druck- oder Zuggestänges zum Anheben der Lastrolle ist ein Einstellmechanismus vorgesehen, bei der die Koppelposition einstellbar ist. Nachteilig hieran ist, dass die Einstellmöglichkeiten des Koppelhebels schlecht zugänglich sind und eine Justierung des Koppelpunktes für die Lastrollen aufwendig ist.

Aus der unveröffentlichten DE 10 2019 101 919 ist ein Flurförderzeug mit einem zweiteiligen Dreieckshebel gemäß dem Oberbegriff des Anspruchs 1 bekannt.

Mit den in den zuvor genannten Dokumenten offenbarten Flurförderzeugen können Ladungsträger nur dann zuverlässig aufgenommen werden, wenn Flurförderzeug und Ladungsträger auf einer gemeinsamen Ebene stehen. Es kann jedoch vorkommen, dass Flurförderzeug und Ladungsträger in einer Winkellage zueinanderstehen. So kann es vorkommen, dass ein horizontal angeordneter Ladungsträger mittels eines auf einer Schräge stehenden Flurförderzeugs aufgenommen werden soll. Ist beispielsweise ein an einer Entladerampe stehender, mit Paletten beladener LKW zu entladen, muss das Flurförderzeug auf der Rampe stehend mit seinem Radarm in die erste Palettenreihe gelangen können. Dies ist mit den erwähnten Flurförderzeugen nicht oder nur umständlich möglich, da die Radarme entweder über die Einfahrhöhe des Ladungsträgers hinausragen oder mit ihrer Unterseite auf dem Rampenknick aufliegen.

Aus DE 36 14 986 A1 ist ein Gabelhubwagen mit einem lenkbaren Antriebsteil und einem höhenbeweglichen Lastteil bekannt, der eine solche Schrägstellung erlaubt. Für diese Schrägstellung ist zusätzlich zu einem den Lastrahmen anhebenden Hubzylinder ein Steuerzylinder vorgesehen, der separat auf den Lastrahmen wirkt. So können Gabelspitze und Gabelwurzel des Lastteils separat angehoben und der Lastrahmen damit schräg gestellt werden. Diese Lösung ist allerdings aufwändig und kostspielig, da ein zusätzlicher Steuerzylinder vorgesehen und korrekt angesteuert werden muss. Dies kann insbesondere auch eine Anpassung der Fahrzeugsteuerung erfordern.

Aus EP 3 354 535 A1 ist ein Hubwagen mit einem Antriebsteil und einem zumindest einen Lastarm umfassendes Lastteil bekannt geworden. Der Lastarm besitzt an seiner Spitze eine Lastrolleneinrichtung, die über eine Initialhubvorrichtung relativ zum Antriebsteil anhebbar und absenkbar ist. Die Initialhubvorrichtung weist zum Anheben des Lastarms ein mit dem Lastrollenhebel in Verbindung stehendes Gestänge und einen das Gestänge betätigenden Betätigungshebel auf. Der Lastrollenhebel ist einstückig ausgeführt.

Aus EP 0 439 837 A1 ist ein Gabelhubwagen bekannt geworden, der eine Höhenverstellung des Lastrades gegenüber dem Lastträger aufweist. Über einen Dreipunktlenker kann das Lastrad aufgestellt werden, wobei dieser auf einer Kreisbogenbahn geführt ist.

Der Erfindung liegt ausgehend davon die Aufgabe zugrunde, ein Flurförderzeug bereitzustellen, das mit einfachen Mitteln ein Schrägstellen des Lastrahmens erlaubt.

Erfindungsgemäß wird die Aufgabe durch ein Flurförderzeug mit den Merkmalen aus Anspruch 1 gelöst. Vorteilhafte Ausgestaltungen sind Gegenstand der abhängigen Ansprüche, der Beschreibung sowie der Figuren.

Das erfindungsgemäße Flurförderzeug ist mit einem Antriebsteil und einem mindestens einen Radarm aufweisenden Lastrahmen ausgestattet. Der Lastrahmen kann mittels eines Stellantriebs eine Hubbewegung ausführen, wobei für jeden Radarm ein schwenkbar gelagerter Dreieckshebel vorgesehen ist. Von dem Dreieckshebel besitzt jeder einen ersten Gelenkpunkt, der an dem Lastrahmen schwenkbar gelagert ist und einen zweiten Gelenkpunkt, der an dem Fahrzeugrahmen schwenkbar gelagert ist. In einem dritten Gelenkpunkt ist der Dreieckshebel mit einer Kinematikstange verbunden, die ein oder mehrere Lasträder an einem freien Ende des Radarms relativ zu diesem für eine angehobene Position verstellen kann. Der Dreieckshebel weist also zumindest drei räumlich nicht zusammenfallende Gelenkpunkte auf, die ein Dreieck aufspannen. Der Dreieckshebel kann in diesem Sinne auch als ein Dreipunkthebel verstanden werden. Der Dreieckshebel übersetzt mittels der Kinematikstange die Hubbewegung auf die Lasträder. Insbesondere greift die Kinematikstange dabei an einem mit dem Lastrad verbundenen Lastradhebel an und verschwenkt so das Lastrad. Für die Verwendung der Kinematikstange ist es unerheblich, ob das oder die mehreren Lasträder mittels Druck oder mit Zug betätigt werden.

Erfindungsgemäß ist der mindestens eine Dreieckshebel zweiteilig ausgestaltet und umfasst einen ersten Umlenkhebel und einen zweiten Umlenkhebel, wobei der erste Umlenkhebel den ersten Gelenkpunkt und den zweiten Gelenkpunkt aufweist. Der zweite Umlenkhebel weist zusätzlich einen vierten Gelenkpunkt auf. Auch der dritte Gelenkpunkt ist an dem zweiten Umlenkhebel vorgesehen. Der zweite Umlenkhebel ist mit dem vierten Gelenkpunkt an dem ersten Umlenkhebel verschwenkbar angelenkt. Der Vorteil der zweiteiligen Ausgestaltung des Dreieckshebels mit einem zweiten Umlenkhebel und einem ersten Umlenkhebel liegt darin, dass eine einfachere Justage und Einstellung des Dreieckshebels in Bezug auf das Anheben der Lasträder möglich ist. Durch die Zweiteiligkeit gibt es für die Justage und Einstellung zusätzliche Freiheitsgrade, die ein Einstellen der Kinematikstange vereinfachen. Durch die Zweiteiligkeit des Dreieckshebels ist bei der Justage die räumliche Beziehung zwischen dem ersten, dem zweiten und dem dritten Gelenkpunkt einstellbar. Im Gegensatz dazu ist bei einem einteiligen Dreieckshebel dieses räumliche Verhältnis der drei Gelenkpunkte zueinander fest vorgegeben. Es kann sich bei dem ersten Umlenkhebel um einen äußeren Umlenkhebel und bei dem zweiten Umlenkhebel um einen inneren Umlenkhebel handeln, wobei der äußere Umlenkhebel zwei Schenkel aufweisen kann zwischen denen der innere Umlenkschenkel ausgelenkt ist, wie noch erläutert wird.

Zudem ist der erfindungsgemäße zweiteilige Dreieckshebel derart ausgebildet, dass durch die Hubbewegung des Lastrahmens von einer abgesenkten Position in die angehobene Position der zweite Umlenkhebel mitsamt dem dritten Gelenkpunkt um den vierten Gelenkpunkt relativ zu dem ersten Umlenkhebel verschwenkt wird. Dieses Verschwenken erfolgt dabei von einer Freigabestellung, in der der zweite Umlenkhebel mitsamt dem dritten Gelenkpunkt relativ zu dem ersten Umlenkhebel verschwenkbar ist, hin zu einer Koppelstellung, in der die Umlenkhebel nur gemeinsam ohne eine relative Lageänderung zueinander um einen der Gelenkpunkte verschwenkbar sind, insbesondere um den ersten Gelenkpunkt und/oder um den zweiten Gelenkpunkt.

In der Freigabestellung ist folglich der zweite Umlenkhebel für eine Relativbewegung relativ zum ersten Umlenkhebel beim Anheben des Lastrahmens freigegeben. So kann der zweite Umlenkhebel beim Anheben des Lastrahmens mittels des Stellantriebs relativ zum ersten Umlenkhebel um den vierten Gelenkpunkt verschwenken, insbesondere kann der zweite Umlenkhebel auf den ersten Umlenkhebel zuschwenken. So kann mit zunehmender Hubhöhe ein Abstand zwischen den Umlenkhebeln kleiner werden. Solange der zweite Umlenkhebel gegenüber dem ersten Umlenkhebel derart frei verschwenkbar, also in der Freigabestellung ist, wird die Hubbewegung nicht über die Kinematikstange auf die Lasträder übersetzt. Dies liegt letztlich daran, dass der somit ebenfalls frei verschwenkbare dritte Gelenkpunkt, an dem die Kinematikstange angebunden ist, keine eine Gegenkraft aufbringende Abstützung erfährt. Da die Kinematikstange in der Freigabestellung nicht auf die Lasträder wirkt, also insbesondere nicht auf einen Lastradhebel, werden die Lasträder nicht gegenüber dem Radarm ausgeschwenkt, sondern verbleiben im Wesentlichen in Ihrer Grundstellung im Radarm. Somit wird die Radarmspitze zunächst nicht mit angehoben, sondern nur die Radarmwurzel. Dies führt zu der gewünschten Schrägstellung des Radarms bzw. des gesamten Lastrahmens derart, dass der Radarm bei auf einer Rampe stehendem Flurförderzeug im Wesentlichen horizontal verläuft und damit problemlos in einen horizontal stehenden Ladungsträger eingefahren werden kann.

Mit zunehmender Hubhöhe wird der zweite Umlenkhebel so lange relativ zu dem ersten Umlenkhebel verschwenkt, durchläuft also so lange die Freigabestellung, bis die Koppelstellung erreicht ist. In der Koppelstellung ist die Verschwenkbarkeit der Umlenkhebel relativ zueinander zumindest beim Anheben nicht mehr gegeben. Schwenkt der zweite Umlenkhebel beim Anheben des Lastrahmens auf den ersten Umlenkhebel zu, so ist die Koppelstellung insbesondere dann erreicht, wenn der Abstand zwischen den Umlenkhebeln verschwindet, wenn also die Umlenkhebel aneinander anschlagen. In der Koppelstellung sind die Umlenkhebel nicht länger um den vierten Gelenkpunkt relativ zueinander verschwenkbar, da sich der zweite Umlenkhebel nun am ersten Umlenkhebel abstützt. Somit verschwenken die Umlenkhebel bei weiterer Ausführung der Hubbewegung nur noch gemeinsam. Damit ist auch der dritte Gelenkpunkt nicht länger frei verschwenkbar, sondern erfährt durch die Abstützung eine Gegenkraft. Folglich wird von nun an die Hubbewegung über die Kinematikstange auf die Lasträder übersetzt, welche gegenüber dem Radarm ausgeschwenkt werden und somit die Radarmspitze anheben. Die Radarmspitze kann so der zuvor angehobenen Radarmwurzel nachgeführt werden. Insbesondere kann so wieder eine flurparallele Ausrichtung des Radarms erreicht werden.

Die Schrägstellung des Lastrahmens kann somit erfindungsgemäß, ohne einen zusätzlichen Stellzylinder, nur durch die mechanische Anbindung des Lastrahmens an den Antriebsrahmen mittels des Dreieckshebel erreicht werden. Insbesondere wird diese Schrägstellung beim Anheben des Lastrahmens automatisch durchlaufen. Dies ist konstruktiv einfacher und kostengünstiger und erfordert insbesondere keine oder keine aufwändige Anpassung der Fahrzeugsteuerung. Beim Absenken des Lastrahmens kann der Bewegungsablauf entsprechend rückwärts durchlaufen werden. Im Gegensatz zu den eingangs erläuterten Flurförderzeugen wird die Hubbewegung über den Dreieckshebel und die Kinematikstange zumindest in der Freigabestellung nicht derart auf die Lasträder übersetzt, dass der Lastrahmen über seine gesamte Länge, d.h. von Radarmwurzel bis zur Radarmspitze, gleichmäßig angehoben wird. Diese Übersetzung erfolgt erst, wenn die Kontaktflächen einander berühren und damit die Koppelstellung erreicht ist. Damit erfolgt dann, wie erläutert, ein Anheben auch der Radarmspitze. Das Anheben der Radarmspitze kann schneller erfolgen als das der Radarmwurzel, wie noch erläutert wird.

Wie bereits angesprochen, kann mit zunehmender Hubhöhe ein Abstand zwischen den Umlenkhebeln geringer werden und mit Erreichen der Koppelstellung verschwinden. Hierbei können Kontaktflächen der Umlenkhebel aneinander treffen. So können nach einer Ausgestaltung in der Freigabestellung Kontaktflächen der Umlenkhebel um einen Abstand voneinander beabstandet sein, und in der Koppelstellung miteinander in Kontakt stehen. Der zweite Umlenkhebel kann folglich eine zweite Kontaktfläche aufweisen und der erste Umlenkhebel eine erste Kontaktfläche, wobei in der Koppelstellung die erste Kontaktfläche mit der zweiten Kontaktfläche in Kontakt steht und in der Freigabestellung die erste Kontaktfläche von der zweiten Kontaktfläche beabstandet ist. Beim Verschwenken der Umlenkhebel relativ zueinander um den vierten Gelenkpunkt können die Kontaktflächen sich also annähern, durch die Hubbewegung, oder sich voneinander entfernen, nämlich bei einer der Hubbewegung entgegengesetzten Senkbewegung. Der Abstand der beiden Kontaktflächen voneinander kann in der abgesenkten Position, insbesondere in einer vollständig abgesenkten Position, des Lastrahmens maximal sein und mit Anheben des Lastrahmen abnehmen. Solange noch ein Abstand zwischen den Kontaktflächen besteht, ist die Freigabestellung noch nicht verlassen, die Koppelstellung also noch nicht erreicht. Der maximale Abstand zwischen den Kontaktflächen kann beispielsweise derart gewählt sein, dass diese erst bei einer Rampenhubhöhe von ca. 50 mm gegenüber der abgesenkten Position miteinander in Kontakt treten. Damit stünde dann die Radarmwurzel ca. 50 mm höher als die Radarmspitze und der Lastrahmen wäre keilförmig angeordnet. Somit kann ohne Probleme mit auf einer Rampe stehendem Flurförderzeug ein in einer Winkellage dazu stehender Ladungsträger aufgenommen werden.

Nach Erreichen der Koppelstellung wird, wie erläutert, auch die Radarmspitze durch den Hubvorgang angehoben. Nach einer Ausgestaltung wirkt dabei der zweiteilige Dreieckshebel mit einem derartigen Übersetzungsverhältnis auf die Kinematikstange ein, dass bei einer Fortführung der Hubbewegung über die Koppelstellung hinaus die Radarmspitze schneller angehoben wird als die Radarmwurzel. Dieses Übersetzungsverhältnis kann insbesondere eingestellt werden über die Entfernung zwischen dem am Lastrahmen befindlichen zweiten Gelenkpunkt und dem am zweiten Umlenkhebel befindlichen, mit der Kinematikstange verbundenen dritten Gelenkpunkt. Bei ausreichender Größe dieser Entfernung wird ein ausreichend großer Hebel gebildet, der zu einem entsprechend schnellen Anheben der Radarmspitze führt. Somit kann die Radarmspitze die Radarmwurzel im Zuge der Hubbewegung einholen und es kann zügig wieder eine flurparallele Position des Radarms erreicht werden.

Nach einer diesbezüglichen Ausgestaltung weist einer der Umlenkhebel ein Einstellmittel auf, welches den Abstand zwischen den Kontaktflächen der Umlenkhebel bestimmt. Das Einstellmittel kann insbesondere eine Einstellschraube sein. Durch Verstellen des Einstellmittels, also bspw. durch Eindrehen oder Ausdrehen der Einstellschraube, kann somit die eine Kontaktfläche näher an die andere Kontaktfläche gebracht werden oder weiter von dieser entfernt werden. Eine der Kontaktflächen kann dabei insbesondere durch die Einstellschraube gebildet sein. Mit einem solchen Einstellmittel kann in einfacher Weise die erwähnte Rampenhubhöhe und damit die maximale Schrägstellung des Radarms eingestellt werden. So kann auch der Nutzer des Flurförderzeugs noch vor Ort eine für die Gegebenheiten, beispielsweise für die Steigung einer LKW-Rampe, passende Rampenhubhöhe wählen.

Allgemein können drei vorteilhafte Ausgestaltungen des Dreieckshebels unterschieden werden. In einer ersten Ausgestaltung sind der erste Gelenkpunkt des ersten Umlenkhebels und der vierte Gelenkpunkt des zweiten Umlenkhebels in einer gemeinsamen Lagerposition am Lastrahmen verbunden. Es entsteht also die Situation, dass der Dreieckshebel in dem ersten Gelenkpunkt des ersten Umlenkhebels und dem vierten Gelenkpunkt des zweiten Umlenkhebels gemeinsam am Lastrahmen befestigt ist.

In einer weiteren Ausgestaltung teilen der zweite Gelenkpunkt des ersten Umlenkhebels und der vierte Gelenkpunkt des zweiten Umlenkhebels eine gemeinsame Lagerposition am Fahrzeugrahmen. Bei dieser Ausgestaltung bestimmt die relative Lage zwischen erstem und drittem Gelenkpunkt die Auslenkbewegung der Kinematikstange bei einem Hebevorgang.

In einer weiteren bevorzugten Ausgestaltung ist der erste Umlenkhebel mit einem fünften Gelenkpunkt ausgestattet, an dem der zweite Umlenkhebel mit seinem vierten Gelenkpunkt angelenkt ist. Der fünfte Gelenkpunkt ist dabei bevorzugt von dem ersten und dem zweiten Gelenkpunkt verschieden. Auch bei dieser Ausgestaltung kann eine Justierung der Kinematikstange durch eine Positionierung des dritten Gelenkpunkts gegenüber dem ersten oder zweiten Gelenkpunkt erfolgen. Insbesondere können bei allen drei Ausgestaltungen die Umlenkhebel in der erfindungsgemäßen Weise zwischen Freigabestellung und Koppelstellung verstellt werden.

In einer bevorzugten Ausgestaltung ist einer der Umlenkhebel mit einem Einstellmittel ausgestattet, welches die relative Position des zweiten Umlenkhebels gegenüber dem ersten Umlenkhebel zumindest in der Koppelstellung begrenzt oder festlegt. Der erste Umlenkhebel verbindet bei allen Ausgestaltungen den Lastrahmen und den Fahrzeugrahmen. Deren relative Position zueinander ist durch den Stellantrieb für die Hubbewegung vorgegeben. Das Einstellmittel positioniert den zweiten Umlenkhebel zumindest in der Koppelstellung relativ zu dem ersten Umlenkhebel. Da der zweite Umlenkhebel in einem Punkt mit der Kinematikstange verbunden ist, wird hierdurch dann auch die Kinematikstange relativ zu Lastrahmen und Fahrzeugrahmen festgelegt. Dies eröffnet die Möglichkeit einer einfachen Einstellung. Es kann sich dabei insbesondere um das oben erwähnte Einstellmittel handeln, welches den Abstand zwischen den Kontaktflächen der Umlenkhebel bestimmt.

In einer bevorzugten Ausgestaltung ist als Einstellmittel eine Einstellschraube vorgesehen. Durch Drehen der Einstellschraube wird die relative Position des zweiten Umlenkhebels zum ersten Umlenkhebel zumindest in der Koppelstellung festgelegt, sodass diese durch Drehen eingestellt werden kann.

In einer bevorzugten Weiterbildung legt das Einstellmittel die relative Position von erstem und zweitem Umlenkhebel in Bezug auf eine Winkellage der beiden Hebel relativ zueinander zumindest in der Koppelstellung fest. Der zweite Umlenkhebel bestimmt dabei durch das Einstellmittel seine Winkellage zu dem ersten Umlenkhebel, dessen Position durch die relative Position von Lastrahmen und Fahrzeugrahmen vorgegeben ist.

In einer bevorzugten Weiterbildung besitzt der andere, nicht das Einstellmittel aufweisende Umlenkhebel eine Anschlagfläche für das Einstellmittel. Das Einstellmittel liegt an der Anschlagfläche an und ist hier entsprechend abgestützt. Die Relativbewegung der beiden Umlenkwinkel gegenübereinander wird durch die Anschlagfläche begrenzt. Die erwähnten Kontaktflächen der Umlenkhebel können dabei durch das Einstellmittel bzw. die Anschlagfläche gebildet sein.

In einer weiteren bevorzugten Ausgestaltung weist der erste Umlenkhebel in seinem Gelenkpunkt für den zweiten Umlenkhebel zwei Schenkel auf, zwischen denen der zweite Umlenkhebel angelenkt ist. Durch diese umgreifende Anlenkung des zweiten Umlenkhebels erhält der gesamte Dreieckshebel zusätzlich eine seitliche Stabilität. Der erste Umlenkhebel kann hierbei auch als äußerer Umlenkhebel und der zweite Umlenkhebel als innerer Umlenkhebel bezeichnet werden.

Ein bevorzugtes Ausführungsbeispiel wird nachfolgend anhand der Figuren beschrieben. Es zeigen:
- Figur 1: einen Niederhubwagen in einem Längsschnitt mit abgesenktem Lastteil,
- Figur 2: den Niederhubwagen aus Figur 1 mit angehobener Gabel wurzel,
- Figur 3: den Niederhubwagen mit vollständig angehobenem Lastteil, und
- Figuren 4a bis c: eine Bewegungsfolge des Niederhubwagens beim Einfahren in einen Ladungsträger über eine Rampe.

Soweit nichts anderes angegeben ist, bezeichnen im Folgenden gleiche Bezugszeichen gleiche Gegenstände.

Die Figuren zeigen einen Niederhubwagen 10, mit einem Antriebsteil 12 sowie einem Lastteil 14. Das Antriebsteil 12 besitzt einen schematisch dargestellten Stellantrieb 16, beispielsweise in Form eines Hydraulikzylinders, über den eine Hubbewegung des Lastteils 14 herbeigeführt werden kann. Ferner besitzt das Antriebsteil 12 ein Rad 18 sowie einen das Rad antreibenden, nicht dargestellten Fahrantrieb. Der Stellantrieb 16 ist an dem Fahrzeugrahmen 20 montiert.

Das Lastteil 14 besitzt einen Lastrahmen 22, der mit zwei Radarmen 24 ausgestattet ist. Von den beiden Radarmen ist in den Schnittzeichnungen jeweils nur einer der Radarme zu erkennen. Mit einer Radarmwurzel 25 ist der Radarm 24 an den Lastrahmen 22 angebunden und erstreckt sich von dem Lastrahmen 22 fort in eine Radarmspitze 26. Aufgenommen in der Radarmspitze 26 ist eine Lastrolle 28 ersichtlich, die über einen Lastradhebel 30 um einen Lastradschwenkpunkt 32 verschwenkbar ist. In einem Lastradhebelpunkt 37 des Lastradhebels 30 ist eine Kinematikstange 34 angelenkt, die in dem vorliegenden Ausführungsbeispiel als Druckstange ausgebildet ist. An ihrem zum Antriebsteil 12 zeigenden Ende ist die Kinematikstange 34 mit einem Dreieckshebel 36 verbunden. Der Dreieckshebel 36 ist in einem ersten Gelenkpunkt 38 an dem Lastrahmen 22 und in einem zweiten Gelenkpunkt 40 an dem Fahrzeugrahmen 20 schwenkbar gelagert. In einem dritten Gelenkpunkt 42 ist die Kinematikstange 34 an den Dreieckshebel 36 angebunden.

Der erfindungsgemäße Dreieckshebel 36 ist zweiteilig ausgestaltet mit einem ersten Umlenkhebel 46 und einem zweiten Umlenkhebel 48, die relativ zueinander um einen mit dem ersten Gelenkpunkt 38 zusammenfallenden vierten Gelenkpunkt 54 verschwenkbar sind. Wie ersichtlich, sind am ersten Umlenkhebel 46 der erste Gelenkpunkt 38 und der zweite Gelenkpunkt 40 vorgesehen, während am zweiten Umlenkhebel 48 der dritte Gelenkpunkt 42 vorgesehen ist. Der erste Umlenkhebel kann insbesondere zwei Schenkel aufweisen, zwischen denen der zweite Umlenkhebel verschwenkt. So kann der erste Umlenkhebel einen äußeren Umlenkhebel bilden, zwischen dessen Schenkeln der einen inneren Umlenkhebel bildende zweite Umlenkhebel ausgelenkt ist. Eine solche Anordnung ist seitlich besonders stabil.

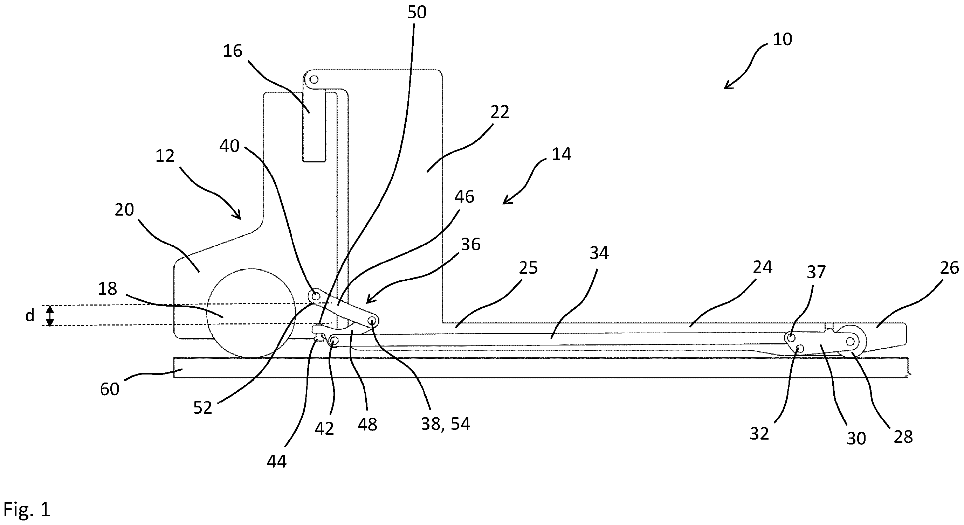

Figur 1 zeigt den Niederhubwagen 10 mit dem Lastrahmen 22 sowie die an den Lastrahmen 22 anschließende Radarmwurzel 25 in einer abgesenkten Position. Auch die Radarmspitze 26 ist bei der Darstellung in Figur 1 abgesenkt, sodass das gesamte Lastteil 14 sich in vollständig abgesenkter Position befindet. Die Umlenkhebel 46, 48 sind um den gemeinsamen vierten Gelenkpunkt 54 voneinander fortgeschwenkt. Der Dreieckshebel 36 befindet sich somit in einer Freigabestellung, in welcher der zweite Umlenkhebel 48 gegenüber dem ersten Umlenkhebel 46 um den vierten Gelenkpunkt 54 durch Ausführen der Hubbewegung des Lastteils 14 verschwenkbar ist. Eine zweite Kontaktfläche 50 des zweiten Umlenkhebels 48 ist dabei von einer ersten Kontaktfläche 52 des ersten Umlenkhebels 46 um einen Abstand d entfernt. Die zweite Kontaktfläche 50 ist vorliegend an einer Einstellschraube 44 ausgebildet, die als Einstellmittel dient, wie später noch erläutert wird.

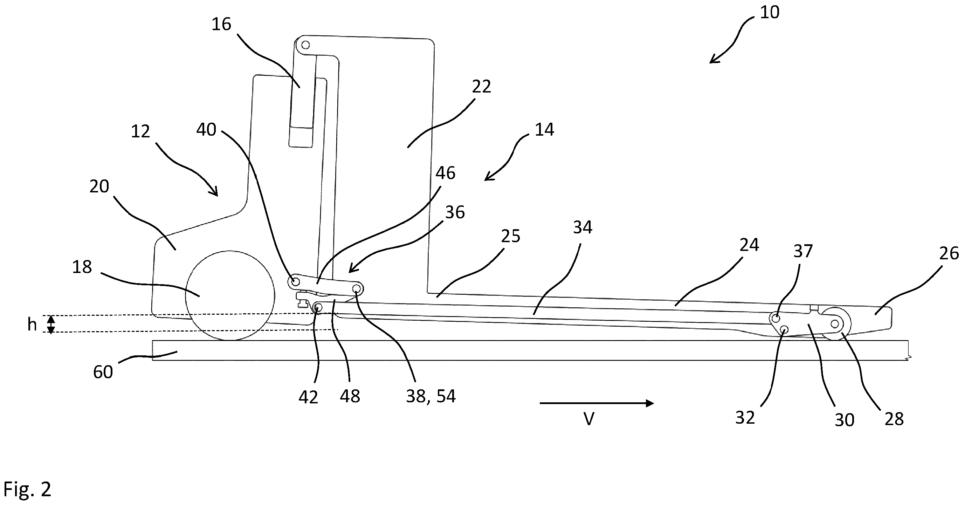

Beim Ausführen einer Hubbewegung mittels des Stellantriebs 16 wird der Lastrahmen 22 gegenüber dem Antriebsteils 12 nach oben ausgefahren, wie in Figur 2 ersichtlich. Gemeinsam mit dem Lastrahmen 22 wird entsprechend auch der erste Gelenkpunkt 38 angehoben, sodass der erste Umlenkhebel 46 um den zweiten Gelenkpunkt 40 verschwenkt. Bei dieser Hubbewegung wird der Dreieckshebel 36 scherenartig geschlossen, der zweite Umlenkhebel 48 also zu dem ersten Umlenkhebel 46 um den vierten Gelenkpunkt 54 hin verschwenkt. Gemeinsam mit dem zweiten Umlenkhebel 48 wird in entsprechender Weise auch der am zweiten Umlenkhebel 48 angeordnete dritte Gelenkpunkt 42 verschwenkt, der sich somit auf den zweiten Gelenkpunkt 40 zubewegt, und zwar so lange bis die Kontaktflächen 50, 52 der Umlenkhebel 46, 48 einander kontaktieren und damit die Umlenkhebel 46, 48 in Anlage zueinander kommen, wie in Figur 2 dargestellt. Solange die Kontaktflächen 50, 52 einander noch nicht berühren, befindet sich der Dreieckshebel 36 in einer Freigabestellung, in der der zweite Umlenkhebel 48 mitsamt dem dritten Gelenkpunkt 42 relativ zu dem ersten Umlenkhebel 46 verschwenkbar ist. Bei der Hubbewegung von der abgesenkten Position in Figur 1 hin zu der in Figur 2 ersichtlichen angehobenen Position erfährt der dritte Gelenkpunkt 42 folglich keine Abstützung, d. h. der Schwenkbewegung des zweiten Umlenkhebels 48 und damit des dritten Gelenkpunkts 42 relativ zu dem ersten Umlenkhebel 46 steht keine Kraft entgegen, die nicht durch die Hubbewegung überwunden werden könnte. Der dritte Gelenkpunkt 42 wird somit im Wesentlichen frei bewegt. Dies hat zur Folge, dass die über den dritten Gelenkpunkt 42 an dem Dreieckshebel 46 angelenkte Kinematikstange 34 keinen Vorschub in Richtung V erfährt. Aufgrund des mangelnden Vorschubs der Kinematikstange 34 erfolgt kein Verschwenken des Radarmhebels 30, damit kein Aufstellen des Lastrades 28 und damit kein Anheben der Radarmspitze 26. Aufgrund dieser freien Bewegung des zweiten Umlenkhebels 48 und damit des dritten Gelenkpunkts 42 kann folglich die in Figur 2 dargestellte Schrägstellung des Lastteils 14, d. h. des Lastrahmens 22 und des Radarms 24 erreicht werden. Bezogen auf einen den Niederhubwagen tragenden Boden 60 ist das Lastteil 14 somit keilförmig angeordnet.

Über die Dimensionierung des Dreieckshebels 36 kann eine gewünschte Rampenhubhöhe h eingestellt werden, um welche aufgrund der erfindungsgemäßen Ausgestaltung des Dreieckshebels lediglich die Radarmwurzel, nicht jedoch die Radarmspitze angehoben wird. Zudem kann die Rampenhubhöhe auch durch die Einstellschraube 44 nachträglich eingestellt werden. So kann durch Verstellen der Einstellschraube 44 die zweite Kontaktfläche 50 näher an die erste Kontaktfläche 52 gebracht werden, sodass bei Ausführen der Hubbewegung beginnend von der in Figur 1 dargestellten abgesenkten Position schneller die Freigabestellung verlassen und eher die Koppelstellung erreicht wird. Die Rampenhubhöhe kann beispielsweise 50 mm gegenüber der in Figur 1 ersichtlichen, vollständig abgesenkten Stellung des Lastteils betragen. Mit einem derartig schräg gestellten Lastteil 14 kann der Niederhubwagen 10 nun problemlos auch von einer Rampe aus in einen Ladungsträger einfahren, der relativ zu der Rampe in einer Winkellage steht.

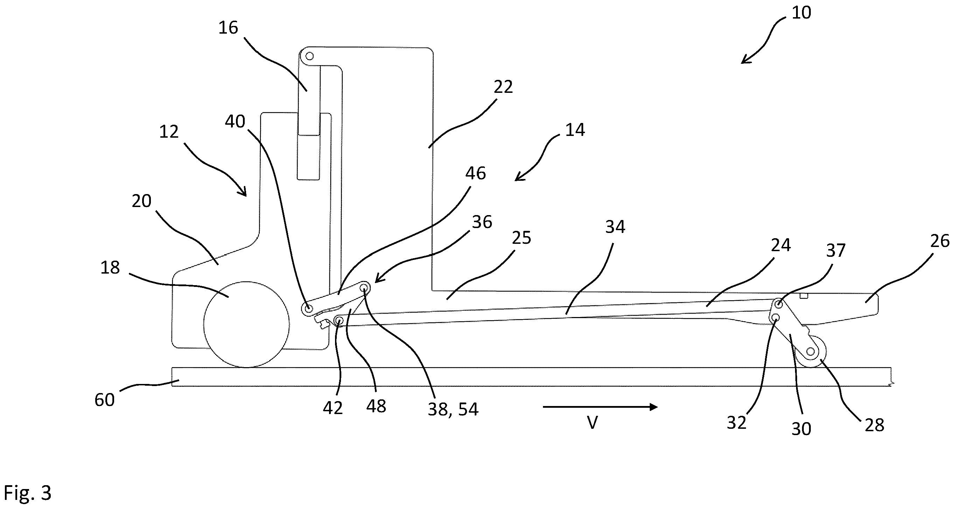

Sobald durch die Hubbewegung die in Figur 2 dargestellte Koppelstellung erreicht ist, sind die Umlenkhebel 46, 48 nicht länger um den vierten Gelenkpunkt 54 relativ zueinander verschwenkbar. So treten nun die Kontaktflächen 50, 52 aneinander, sodass der zweite Umlenkhebel 48 bei einer weiteren Hubbewegung gegenüber dem ersten Umlenkhebel 46 abgestützt wird. Dadurch erfährt der zweite Umlenkhebel 48 und damit der dritte Gelenkpunkt 42 eine Gegenkraft, welche auf die Kinematikstange 34 übertragen wird und zu einem Vorschub der Kinematikstange 34 in Richtung V führt. Durch diesen Vorschub wird der im Lastradhebelpunkt 37 mit der Kinematikstange 34 verbundene Lastradhebel 30 um den Lastradschwenkpunkt 32 verschwenkt und das Lastrad 28 somit aufgestellt, wie in Figur 3 ersichtlich. In dieser Koppelstellung sind also die Umlenkhebel 46, 48 im Rahmen der Hubbewegung nur noch gemeinsam ohne eine relative Lageänderung zueinander um den zweiten Gelenkpunkt 40 verschwenkbar. Somit wird ab Erreichen der Koppelstellung im weiteren Hubvorgang auch die Radarmspitze 26 angehoben. Somit kann im Anschluss an die in Figur 2 ersichtliche Schrägstellung des Lastteils 14 wieder eine, in Figur 3 ersichtliche, bodenparallele Stellung des Lastteils 14 erreicht werden. Insbesondere kann hierfür, aufgrund des Übersetzungsverhältnisses zwischen Dreieckshebel 36 und Kinematikstange 34 die Radarmspitze während der weiteren Hubbewegung die Radarmwurzel einholen, wie später noch erläutert wird. Ein Ladungsträger kann somit zuverlässig aufgenommen werden.

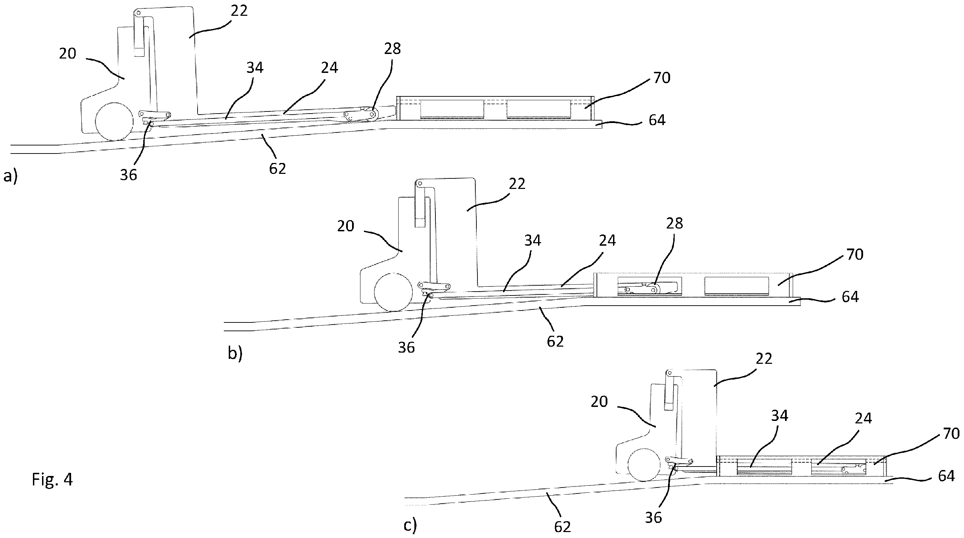

Dies wird durch die in den Figuren 4 a) bis c) dargestellte Bewegungsfolge deutlich. In Figur 4 a) steht der Niederhubwagen 10 auf einer Rampe 62. Der Lastrahmen 22 ist bis zur Rampenhubhöhe ausgefahren, der Dreieckshebel 36 hat also gerade die Koppelstellung erreicht. Somit ist die Radarmspitze 26 bisher nicht angehoben, sondern lediglich die Radarmwurzel 25. Wie in Figur 4 b) deutlich wird, kann der Niederhubwagen 10 problemlos in den Ladungsträger 70 einfahren, ohne dass eine Unterseite des Radarms 24 auf einen Rampenknick zwischen der Rampe 62 und der horizontalen Ebene 64 auftrifft. Ist der Niederhubwagen mit seinen Radarmen 24 vollständig in den Ladungsträger 70 eingefahren, wie Figur 4 c) zu entnehmen, kann anschließend durch Weiterführung der Hubbewegung der Lastrahmen 22 weiter angehoben werden. Aufgrund der nun erreichten Koppelstellung des Dreieckshebels 36 wird dabei auch die Radarmspitze 26 angehoben, sodass der Ladungsträger 70 aufgenommen werden kann.

Der zweiteilige Dreieckshebel 36 wirkt dabei bevorzugt mit einem derartigen Übersetzungsverhältnis auf die Kinematikstange 34, dass bei einer Fortführung der Hubbewegung über die Koppelstellung hinaus die Radarmspitze 26 schneller angehoben wird als die Radarmwurzel 25. Somit kann schnell wieder eine bodenparallele Ausrichtung der Radarme 24 erreicht werden und damit eine möglichst gleichzeitige Aufnahme des Ladungsträgers 70 über die gesamte Länge der Radarme 24. Ein solches Übersetzungsverhältnis kann insbesondere bestimmt sein über die Entfernung zwischen erstem Gelenkpunkt 38 und drittem Gelenkpunkt 42, also den durch die Entfernung zwischen diesen beiden Punkten zustande kommenden Hebel.

Der erfindungsgemäße zweiteilige Dreieckshebel mit seinen relativ zueinander verschwenkbaren Umlenkhebeln erlaubt somit eine Schrägstellung des Lastteils ohne die Notwendigkeit eines separaten Stellzylinders. Die Schrägstellung wird erfindungsgemäß rein mechanisch durch den Dreieckshebel erreicht und beim Anheben des Lastteils über den Stellantrieb ganz automatisch durchlaufen. Beim Absenken des Lastteils kann dieser Bewegungsablauf entsprechend rückwärts vonstattengehen.

So kann beim Absenken zunächst die Radarmspitze 26 abgesenkt werden und erst anschließend, nach Verlassen der Koppelstellung und Übergang in die Freigabestellung, auch die Gabelwurzel 25 nachfolgen.

Durch die Einstellschraube 44 kann im Übrigen auch die relative Position des zweiten Umlenkhebels 48 zum ersten Umlenkhebels 46 in der Koppelstellung bestimmt werden. Somit kann die Bewegungsstrecke, mit der der Lastradhebel 30 über die Kinematikstange 34 verschwenkt wird, verlängert oder verkürzt werden. Somit kann eine Justage oder Einstellung des Dreieckshebels erfolgen.

### Bezugszeichenliste

- 10: Niederhubwagen
- 12: Antriebsteil
- 14: Lastteil
- 16: Stellantrieb
- 20: Fahrzeugrahmen
- 22: Lastrahmen
- 24: Radarme
- 25: Radarmwurzel
- 26: Radarmspitze
- 28: Lastrolle
- 30: Lastradhebel
- 32: Lastradschwenkpunkt
- 34: Kinematikstange
- 36: Dreieckshebel
- 38: erster Gelenkpunkt
- 40: zweiter Gelenkpunkt
- 42: dritter Gelenkpunkt
- 44: Einstellschraube
- 46: erster Umlenkhebel
- 48: zweiter Umlenkhebel
- 50: zweite Kontaktfläche
- 52: erste Kontaktfläche
- 54: vierter Gelenkpunkt
- 60: Boden
- 62: Rampe
- 64: horizontale Ebene

## Patentansprüche

1. Flurförderzeug mit einem Antriebsteil (12) und einem mindestens einen Radarm aufweisenden Lastrahmen (22), der mittels eines Stellantriebes (16) eine Hubbewegung ausführen kann, wobei für jeden Radarm ein schwenkbar gelagerter Dreieckshebel (36) vorgesehen ist, der in einem ersten Gelenkpunkt (38) an dem Lastrahmen (22) und in einem zweiten Gelenkpunkt (40) an dem Antriebsteil (12) schwenkbar gelagert ist und in einem dritten Gelenkpunkt (42) mit einer Kinematikstange (34) verbunden ist, die auf ein oder mehrere Lasträder (28) an einem freien Ende des Radarms wirken und diese somit relativ zu dem Radarm für eine angehobene Position verstellen kann, wobei der Dreieckshebel (36) zweiteilig ausgestaltet ist und einen ersten Umlenkhebel (46) und einen zweiten Umlenkhebel (48) umfasst, wobei am ersten Umlenkhebel (46) der erste Gelenkpunkt (38) und der zweite Gelenkpunkt (40) vorgesehen sind und am zweiten Umlenkhebel (48) der dritte Gelenkpunkt (42) vorgesehen ist, wobei der zweite Umlenkhebel (48) mit einem vierten Gelenkpunkt (54) an dem ersten Umlenkhebel (46) verschwenkbar angelenkt ist, **dadurch gekennzeichnet, dass** der zweiteilige Dreieckshebel (36) derart ausgebildet ist, dass durch die Hubbewegung des Lastrahmens (22) von einer abgesenkten Position in die angehobene Position der zweite Umlenkhebel (48) mitsamt dem dritten Gelenkpunkt (42) um den vierten Gelenkpunkt (54) relativ zu dem ersten Umlenkhebel (46) verschwenkt wird von einer Freigabestellung, in der der zweite Umlenkhebel (48) mitsamt dem dritten Gelenkpunkt (42) relativ zu dem ersten Umlenkhebel (46) verschwenkbar ist, hin zu einer Koppelstellung, in der die Umlenkhebel (46, 48) nur gemeinsam ohne eine relative Lageänderung zueinander um einen der Gelenkpunkte verschwenkbar sind.

2. Flurförderzeug nach Anspruch 1, **dadurch gekennzeichnet, dass** in der Freigabestellung Kontaktflächen (50, 52) der Umlenkhebel (46, 48) um einen Abstand (d) voneinander beabstandet sind, und dass in der Koppelstellung die Kontaktflächen (50, 52) der Umlenkhebel (46, 48) miteinander in Kontakt stehen.

3. Flurförderzeug nach Anspruch 2, **dadurch gekennzeichnet, dass** einer der Umlenkhebel ein Einstellmittel aufweist, welches den Abstand zwischen den Kontaktflächen (50, 52) der Umlenkhebel (46, 48) bestimmt.

4. Flurförderzeug nach einem der vorhergehenden Ansprüche, **dadurch gekennzeichnet, dass** der zweiteilige Dreieckshebel (36) mit einem derartigen Übersetzungsverhältnis auf die Kinematikstange (34) einwirkt, dass bei einer Fortführung der Hubbewegung über die Koppelstellung hinaus die Radarmspitze (26) schneller angehoben wird als die Radarmwurzel (25).

5. Flurförderzeug nach Anspruch 1, **dadurch gekennzeichnet, dass** der erste Gelenkpunkt (38) des ersten Umlenkhebels und der vierte Gelenkpunkt (54) des zweiten Umlenkhebels (48) eine gemeinsame Lagerposition am Lastrahmen (22) teilen.

6. Flurförderzeug nach Anspruch 1, **dadurch gekennzeichnet, dass** der zweite Gelenkpunkt (40) des ersten Umlenkhebels (46) und der vierte Gelenkpunkt (54) des zweiten Umlenkhebels (48) eine gemeinsame Lagerposition am Fahrzeugrahmen (20) teilen.

7. Flurförderzeug nach Anspruch 1, **dadurch gekennzeichnet, dass** der erste Umlenkhebel (46) einen von dem ersten (38) und zweiten (40) verschiedenen fünften Gelenkpunkt aufweist, an dem der zweite Umlenkhebel (48) mittels des vierten Gelenkpunktes (54) an den ersten Umlenkhebel (46) angelenkt ist.

8. Flurförderzeug nach einem der vorhergehenden Ansprüche, **dadurch gekennzeichnet, dass** einer der Umlenkhebel ein Einstellmittel aufweist, welches die relative Position des zweiten Umlenkhebels (48) zum ersten Umlenkhebel (46) in der Koppelstellung bestimmt.

9. Flurförderzeug nach Anspruch 8, **dadurch gekennzeichnet, dass** das Einstellmittel die relative Position von erstem und zweitem Umlenkhebel (46, 48) in Bezug auf deren Winkellage zueinander festlegt.

10. Flurförderzeug nach Anspruch 8 oder 9, **dadurch gekennzeichnet, dass** der andere nicht das Einstellmittel aufweisende Umlenkhebel eine Anschlagsfläche für das Einstellmittel aufweist.

11. Flurförderzeug nach einem der vorhergehenden Ansprüche, **dadurch gekennzeichnet, dass** der erste Umlenkhebel (46) in seinem Gelenkpunkt für den zweiten Umlenkhebel (48) zwei Schenkel aufweist, zwischen denen der zweite Umlenkhebel (48) ausgelenkt ist.

## Claims

1. An industrial truck comprising a drive part (12) and at least one load frame (22) that comprises a wheel arm and that can perform a lifting movement by means of an actuating drive (16), wherein a pivotably mounted triangular lever (36) is provided for each wheel arm and is pivotably mounted at a first articulation point (38) on the load frame (22) and at a second articulation point (40) on the drive part (12) and that is connected at a third articulation point (42) to a kinematic rod (34) that acts on one or more load wheels (28) at a free end of the wheel arm and can thus move same relative to the wheel arm for a raised position, wherein the triangular lever (36) is designed in two parts and comprises a first reversing lever (46) and a second reversing lever (48), wherein the first articulation point (38) and the second articulation point (40) are provided on the first reversing lever (46) and the third articulation point (42) is provided on the second reversing lever (48), wherein the second reversing lever (48) is pivotably articulated to a fourth articulation point (54) on the first reversing lever (46), **characterized in that** the two-part triangular lever (36) is designed such that, on account of the lifting movement of the load frame (22) from a lowered position into the raised position, the second reversing lever (48) together with the third articulation point (42) is pivoted about the fourth articulation point (54) relative to the first reversing lever (46) from a release position, in which the second reversing lever (48) together with the third articulation point (42) is pivotable relative to the first reversing lever (46), into a coupling position, in which the reversing levers (46, 48) are only pivotable together about one of the articulation points without a change in position relative to one another.

2. The industrial truck according to claim 1, **characterized in that**, in the release position, contact surfaces (50, 52) of the reversing levers (46, 48) are spaced apart from one another by a distance (d), and **in that**, in the coupling position, the contact surfaces (50, 52) of the reversing levers (46, 48) are in contact with one another.

3. The industrial truck according to claim 2, **characterized in that** one of the reversing levers comprises a setting means that determines the distance between the contact surfaces (50, 52) of the reversing levers (46, 48).

4. The industrial truck according to any one of the preceding claims, **characterized in that** the two-part triangular lever (36) acts on the kinematic rod (34) with such a transmission ratio that, in the event of a continuation of the lifting movement beyond the coupling position, the wheel arm tip (26) is raised more quickly than the wheel arm base (25).

5. The industrial truck according to claim 1, **characterized in that** the first articulation point (38) of the first reversing lever and the fourth articulation point (54) of the second reversing lever (48) share a common mounting position on the load frame (22).

6. The industrial truck according to claim 1, **characterized in that** the second articulation point (40) of the first reversing lever (46) and the fourth articulation point (54) of the second reversing lever (48) share a common mounting position on the vehicle frame (20).

7. The industrial truck according to claim 1, **characterized in that** the first reversing lever (46) has a fifth articulation point which is different from the first (38) and second (40) and at which the second reversing lever (48) is articulated to the first reversing lever (46) by means of the fourth articulation point (54).

8. The industrial truck according to any one of the preceding claims, **characterized in that** one of the reversing levers comprises a setting means that determines the position of the second reversing lever (48) relative to the first reversing lever (46) in the coupling position.

9. The industrial truck according to claim 8, **characterized in that** the setting means defines the relative position of the first and second reversing lever (46, 48) in terms of the angular position thereof.

10. The industrial truck according to claim 8 or 9, **characterized in that** the other reversing lever not comprising the setting means comprises a stop surface for the setting means.

11. The industrial truck according to any one of the preceding claims, **characterized in that** the first reversing lever (46) comprises, at the articulation point thereof for the second reversing lever (48), two legs between which the second reversing lever (48) is deflected.

## Revendications

1. Chariot de manutention pourvu d'une partie d'entraînement (12) et d'au moins un cadre de charge (22) présentant au moins un bras de roue, lequel est capable d'effectuer un mouvement de levage au moyen d'un actionneur (16), dans lequel il est prévu un levier triangulaire (36) monté de façon pivotante pour chaque bras de roue, lequel est monté de façon pivotante en un premier point d'articulation (38) sur le cadre de charge (22) et en un deuxième point d'articulation (40) sur la partie d'entraînement (12) et relié à une barre cinématique (34) en un troisième point d'articulation (42), lesquels agissent sur une ou plusieurs roues de charge (28) à une extrémité libre du bras de roue et peuvent ainsi régler celles-ci par rapport au bras de roue pour une position relevée, dans lequel le levier triangulaire (36) est conçu en deux parties et comporte un premier levier de déviation (46) et un deuxième levier de déviation (48), dans lequel le premier point d'articulation (38) et le deuxième point d'articulation (40) sont prévus sur le premier levier de déviation (46) et le troisième point d'articulation (42) est prévu sur le deuxième levier de déviation (48), dans lequel le deuxième levier de déviation (48) est articulé de façon pivotante sur le premier levier de déviation (46) avec un quatrième point d'articulation (54), **caractérisé en ce que** le levier triangulaire en deux parties (36) est réalisé de telle façon que le mouvement de levage du cadre de charge (22) de la position abaissée vers la position relevée entraîne un pivotement du deuxième levier de déviation (48) avec le troisième point d'articulation (42) et le quatrième point d'articulation (54) par rapport au premier levier de déviation (46), à partir d'une position de libération dans laquelle le deuxième levier de déviation (48) peut pivoter avec le troisième point d'articulation (42) par rapport au premier levier de déviation (46), vers une position d'accouplement dans laquelle les leviers de déviation (46, 48) peuvent pivoter uniquement ensemble autour de l'un des points d'articulation sans modification de position mutuelle.

2. Chariot de manutention selon la revendication 1, **caractérisé en ce que** dans la position de libération, des surfaces de contact (50, 52) des leviers de déviation (46, 48) sont espacées l'une de l'autre selon une distance (d), et **en ce que** dans la position d'accouplement, les surfaces de contact (50, 52) des leviers de déviation (46, 48) sont en contact l'une avec l'autre.

3. Chariot de manutention selon la revendication 2, **caractérisé en ce que** l'un des leviers de déviation présente un moyen de réglage, lequel détermine la distance entre les surfaces de contact (50, 52) des leviers de déviation (46, 48).

4. Chariot de manutention selon l'une des revendications précédentes, **caractérisé en ce que** le levier triangulaire en deux parties (36) agit sur la barre cinématique (34) avec un rapport de transmission tel que lorsque le mouvement de levage est poursuivi au-delà de la position d'accouplement, la pointe du bras de roue (26) est relevée plus rapidement que la base du bras de roue (25).

5. Chariot de manutention selon la revendication 1, **caractérisé en ce que** le premier point d'articulation (38) du premier levier de déviation et le quatrième point d'articulation (54) du deuxième levier de déviation (48) partagent une même position de repos sur le cadre de charge (22).

6. Chariot de manutention selon la revendication 1, **caractérisé en ce que** le deuxième point d'articulation (40) du premier levier de déviation (46) et le quatrième point d'articulation (54) du deuxième levier de déviation (48) partagent une même position de repos sur le cadre de véhicule (20).

7. Chariot de manutention selon la revendication 1, **caractérisé en ce que** le premier levier de déviation (46) présente un cinquième point d'articulation différent du premier (38) et du deuxième (40), au niveau duquel le deuxième levier de déviation (48) est articulé sur le premier levier de déviation (46) au moyen du quatrième point d'articulation (54).

8. Chariot de manutention selon l'une des revendications précédentes, **caractérisé en ce que** l'un des leviers de déviation présente un moyen de réglage, lequel détermine la position relative du deuxième levier de déviation (48) par rapport au premier levier de déviation (46) dans la position d'accouplement.

9. Chariot de manutention selon la revendication 8, **caractérisé en ce que** le moyen de réglage fixe la position relative du premier et du deuxième levier de déviation (46, 48) quant à leur position angulaire mutuelle.

10. Chariot de manutention selon la revendication 8 ou 9, **caractérisé en ce que** l'autre levier de déviation ne présentant pas le moyen de réglage présente une surface de butée destinée au moyen de réglage.

11. Chariot de manutention selon l'une des revendications précédentes, **caractérisé en ce qu'**en son point d'articulation destiné au deuxième levier de déviation (48), le premier levier de déviation (46) présente deux branches, entre lesquelles le deuxième levier de déviation (48) est déployé.
